# EUROPÄISCHE PATENTSCHRIFT

(11) **EP 2 117 751 B1**
(45) Veröffentlichungstag und Bekanntmachung des Hinweises auf die Patenterteilung: **23.08.2017**
(21) Anmeldenummer: 07857507.3
(22) Anmeldetag: 13.12.2007
(51) Int. Cl.: B23B 31/107, B25D 17/08, B25B 23/00

(54) **WERKZEUGHALTERUNG FÜR EINE WERKZEUGMASCHINE, INSBESONDERE FÜR EINE HANDWERKZEUGMASCHINE**
TOOL HOLDER FOR A MECHANICAL TOOL, IN PARTICULAR A MECHANICAL HAND TOOL
DISPOSITIF PORTE-OUTIL POUR MACHINE-OUTIL, EN PARTICULIER POUR MACHINE PORTABLE

(30) Priorität: 01.02.2007 DE 102007005033
(43) Veröffentlichungstag der Anmeldung: 18.11.2009
(73) Patentinhaber: Robert Bosch GmbH, 70442 Stuttgart (DE)
(72) Erfinder: BOHNE, Ulrich, 72664 Kohlberg (DE)
(86) Internationale Anmeldenummer: PCT/EP2007/063857
(87) Internationale Veröffentlichungsnummer: WO 2008/092532

(56) Entgegenhaltungen:
- EP-A- 1 400 316
- EP-A- 1 690 618
- WO-A-02/064295
- DE-A1- 3 506 008
- DE-A1- 19 636 293
- DE-A1- 19 845 846
- DE-U1- 20 200 413
- US-A- 5 398 946

## Beschreibung

Die Erfindung bezieht sich auf eine Werkzeughalterung für eine Werkzeugmaschine, insbesondere für eine Handwerkzeugmaschine wie z.B. ein Bohrhammer, nach dem Oberbegriff des Anspruches 1. Eine derartige Werkzeughalterung geht beispielsweise aus der WO 02/064295 A hervor.

### Stand der Technik

In der DE 10 2004 036 587 A1 wird eine Aufnahmevorrichtung für eine als Bohrhammer ausgeführte Handwerkzeugmaschine beschrieben, die zur Aufnahme eines Einsatzwerkzeugs ausgebildet ist. Das Einsatzwerkzeug ist in einen als Aufnahmehülse ausgeführten Werkzeughalter axial einsteckbar, in dessen Wandung ein axial verlaufendes Mitnahmeprofil in der Weise angeordnet ist, dass das Einsatzwerkzeug bis an einen Schlagbolzen des Bohrhammers eingeschoben werden kann. Das Einsatzwerkzeug kann drehend und/oder schlagend angetrieben werden. Um unterschiedlich ausgebildete Einsatzwerkzeuge verwenden zu können, beispielsweise einen Schrauber und einen Bohrer, und hierdurch ein breites Verwendungsspektrum zu erhalten, ist man bestrebt, den Werkzeughalter so auszubilden, dass Einsatzwerkzeuge mit unterschiedlichen Schäften eingesetzt werden können. Die Aufnahme im Werkzeughalter muss aber trotz unterschiedlich ausgebildeter Schäfte ohne Sicherheitseinbußen durchzuführen sein, wobei zugleich darauf zu achten ist, dass zusätzlich zur absolut sicheren Halterung auch die Gefahr des Verkantens des Einsatzwerkzeugs im Werkzeughalter reduziert ist.

### Offenbarung der Erfindung

Der Erfindung liegt die Aufgabe zugrunde, mit einfachen konstruktiven Maßnahmen eine leicht zu bedienende Werkzeughalterung für eine Werkzeugmaschine anzugeben,
die bei hoher Betriebssicherheit die Verwendung unterschiedlicher Einsatzwerkzeuge erlaubt.

Diese Aufgabe wird erfindungsgemäß mit den Merkmalen des Anspruches 1 gelöst. Die Unteransprüche geben zweckmäßige Weiterbildungen an.

Die Verriegelungseinrichtung der erfindungsgemäßen Werkzeughalterung umfasst ein Verriegelungselement, das mithilfe eines Blockierglieds zwischen einer Entriegelungsstellung und einer das Einsatzwerkzeug im Werkzeughalter verriegelnden Verriegelungsstellung verstellbar ist. Das Blockierglied ist in dem Werkzeughalter verstellbar gehalten und wird von dem Einsatzwerkzeug beaufschlagt.

Diese Ausführung bietet den Vorteil, dass über das Einsetzen des Einsatzwerkzeuges in den Werkzeughalter das Blockierglied betätigt, welches am Werkzeughalter gehalten und gegenüber diesem eine Relativstellbewegung ausführen kann, wobei über die Bewegung des Blockierglieds automatisch das Verriegelungselement zwischen der Ent- und Verriegelungsposition verstellt wird. Die Stellbewegung des Blockierglieds wird demnach aus der Einführbewegung des Einsatzwerkzeuges in den Werkzeughalter bzw. aus der Entnahmebewegung des Einsatzwerkzeuges aus dem Werkzeughalter heraus abgeleitet.

Das Verriegelungselement führt zweckmäßig eine Radialbewegung aus, so dass die Verriegelungsstellung und die Entriegelungsstellung des Verriegelungselementes durch unterschiedliche radiale Positionen gegenüber der Längsachse des Werkzeughalters gekennzeichnet sind. Das Blockierglied führt dagegen vorzugsweise bei der Überführung zwischen Ver- und Entriegelungsposition eine Axialbewegung aus, so dass die axiale Einschubbewegung des Einsatzwerkzeuges in den Werkzeughalter hinein unmittelbar in die Stellbewegung des Blockierglieds umgesetzt werden kann.

Zweckmäßigerweise erfolgt die Umsetzung der axialen Stellbewegung des Blockierglieds in die radiale Überführungsbewegung des Verriegelungselementes zwischen Ent- und Verriegelungsstellung mittels einer abgeschrägten Verstellfläche am Blockierglied, die vorteilhafterweise als Schräge ausgeführt ist und gegenüber der Längsachse des Werkzeughalters einen Winkel größer 0° und kleiner 90° einnimmt. Für den Fall einer bevorzugten Ausführung des Blockierglieds als Blockierring oder Blockierhülse ist die Verstellfläche vorteilhaft als innen liegende Konusfläche ausgeführt.

Das Verriegelungselement ist bevorzugt als Verriegelungskugel ausgebildet, die in verhältnismäßig einfacher Weise mithilfe der abgeschrägten Fläche des Blockierglieds, die axial gegen die Kugel bewegt wird, in Radialrichtung verstellt werden kann.

Das zweckmäßigerweise hülsenförmige Blockierglied ist von einem zugeordneten Federelement, welches sich insbesondere am Werkzeughalter abstützt, kraftbeaufschlagt, insbesondere in Richtung der Blockierstellung. Zum Überführen des Verriegelungselementes in die Verriegelungsstellung wird das Blockierglied mithilfe des einzuführenden Einsatzwerkzeuges in einer ersten Bewegungsphase gegen die Kraft der auf ihn wirkenden Feder axial verstellt. In einer zweiten Bewegungsphase schnellt das Blockierglied unter dem Wirkung der Federkraft wieder in Richtung der Blockierstellung zurück und hemmt dadurch das mittlerweile in die Verriegelungsposition verstellte Verriegelungselement in seiner weiteren Bewegung.

Gemäß der Erfindung ist ein am Werkzeughalter angeordnetes und das Blockierglied verstellendes Steuerelement vorgesehen, welches insbesondere als Steuerkugel ausgebildet ist. Dieses Steuerelement ist sowohl axial als auch radial verstellbar im Werkzeughalter gehalten. Das Steuerelement wird von dem Einsatzwerkzeug während des Einschiebens in den Werkzeughalter in einer ersten Phase axial verstellt und nimmt hierbei das Blockierglied mit, welches gegen die Kraft der auf ihn wirkenden Feder verschoben wird. In dieser ersten Phase steht das Steuerelement in einer Steuer- bzw. Wirkposition, in der das Blockierglied von dem Steuerelement beaufschlagt wird. Sobald das Steuerelement seine axiale Endposition in einem Langloch erreicht hat, das in die Wandung des Werkzeughalters eingebracht ist, weicht das Steuerelement unter dem Einfluss des axial weiter einzuführenden Einsatzwerkzeuges radial in eine Ausnehmung aus, die in das Blockierglied eingebracht ist, und verschiebt dabei das Blockierglied noch ein Stück in axialer Richtung. Bei dieser Ausnehmung handelt es sich insbesondere um die Ausnehmung, die durch die abgeschrägte Verstellfläche am Blockierglied gebildet ist. Das Steuerelement wird dadurch aus seiner anfänglichen, der ersten Bewegungsphase zugeordneten Steuerposition in einer der zweiten Phase zugeordneten Außerfunktionsposition verstellt. Zugleich fällt die Kraftübertragung zwischen dem Einsatzwerkzeug und dem Blockierglied über das Steuerelement weg, so dass das Blockierglied durch die Wirkung der Feder in die Blockierstellung zurückschnellen kann. Das Verriegelungselement wird vorteilhafterweise im Übergang der ersten Bewegungsphase zur zweiten Bewegungsphase von der Entriegelungsposition in die Verriegelungsposition verstellt und in der letztgenannten Position von dem Blockierglied gehalten, das nunmehr seine Blockierstellung eingenommen hat.

Zum Lösen der Verbindung und Entnehmen des Einsatzwerkzeuges aus dem Werkzeughalter ist vorteilhaft eine Entriegelungshülse vorgesehen, die gegen die Kraft einer auf sie wirkenden Feder axial zu verstellen ist. Durch diese Stellbewegung wird auch das Blockierglied gegen die Kraft der auf ihn wirkenden Feder aus der Blockierstellung in die Freigabeposition überführt, so dass auch das Verriegelungselement aus der Ver- in die Entriegelungsposition überführbar ist und das Einsatzwerkzeug aus dem Werkzeughalter entnommen werden kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Werkzeughalterung für eine Handwerkzeugmaschine, insbesondere einen Bohrhammer, dargestellt zu Beginn des Einsetzens eines Einsatzwerkzeuges in einen hierfür vorgesehenen Werkzeughalter,
- Fig. 2: das Einsatzwerkzeug in einer axial weiter eingeführten Position, in der eine Steuerkugel von dem Schaft des Einsatzwerkzeuges axial verstellt und hierdurch auch eine Blockierhülse gegen die Kraft einer auf sie wirkenden Feder axial verstellt wird,
- Fig. 3: das Einsatzwerkzeug in einer noch weiter eingeführten Position, in der die Steuerkugel von dem Schaft des Einsatzwerkzeuges bei Anlage am hinteren Ende eines Langlochs im Werkzeughalter gegen eine schräge Verstellfläche an der Blockierhülse gedrückt und während der weiteren axialen Verschiebung radial nach außen bewegt wird, wobei zugleich eine Verriegelungskugel ebenfalls von dem Schaft des Einsatzwerkzeuges aus einer Entriegelungsstellung in eine Verriegelungsstellung radial nach außen bewegt wird,
- Fig. 4: die Blockierhülse in einer nächsten Bewegungsphase, in der die Blockierhülse unter der Wirkung ihrer Feder wieder ein Stück weit in Richtung der Blockierstellung zurückgestellt ist,
- Fig. 5: das Einsatzwerkzeug in Verriegelungsstellung in axial weitest möglich eingeschobener Position, in der die Verriegelungskugel von dem Blockierglied in eine Ausnehmung in der Mantelfläche des Schaftes des Einsatzwerkzeuges gedrückt und in dieser Position gehalten wird,
- Fig. 6: die Werkzeughalterung in Entriegelungsposition, in der eine Entriegelungshülse gegen die Kraft einer auf sie wirkenden Feder axial zurückgeschoben und das Blockierglied in die Freigabestellung verschoben ist, so dass die Verriegelungskugel aus der Verriegelungsstellung in die Entriegelungsstellung überführt werden kann,
- Fig. 7: eine perspektivische Ansicht der Werkzeughalterung in teilgeschnittener Darstellung einschließlich des Schaftes eines Bohrers, der in den Werkzeughalter einzusetzen ist,
- Fig. 8: die Werkzeughalterung im Querschnitt.

In den Figuren sind gleiche Bauteile mit gleichen Bezugszeichen versehen.

Bei der in den Figuren dargestellten Handwerkzeugmaschine 1 handelt es sich insbesondere um einen Bohrhammer. Die Werkzeugmaschine 1 umfasst eine Werkzeughalterung 2 mit einem hülsenförmigen Werkzeughalter 3 zur Aufnahme eines Einsatzwerkzeuges 4, dessen Schaft 5 axial in die Aufnahmeöffnung im Werkzeughalter 3 einschiebbar ist. Bei dem Einsatzwerkzeug 4 handelt es sich insbesondere um einen Bohrer, beispielsweise um einen SDS-Bohrer oder um einen HEX-WZ-Bohrer. In die Mantelfläche des Schaftes 5 des Einsatzwerkzeugs 4 ist eine radial zurückgesetzte Ausnehmung 6 begrenzter axialer Länge eingebracht. Der Innenmantel der Aufnahme im Werkzeughalter 3 ist auf verschiedenartige Querschnittsformen des einzusteckenden Schaftes 5 angepasst.

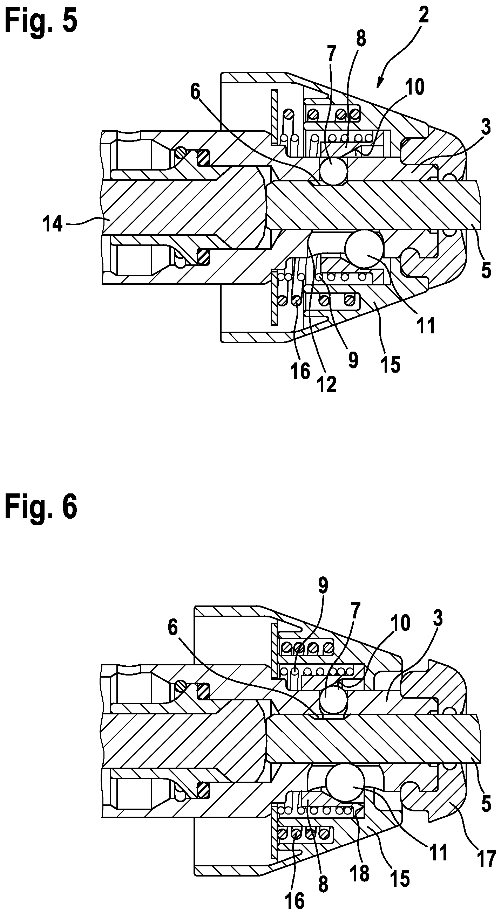

Mit der radial zurückgesetzten Ausnehmung 6 in der Mantelfläche des Schaftes 5 des Einsatzwerkzeugs 4 korrespondiert ein als Verriegelungskugel 7 ausgebildetes Verriegelungselement. Die Verriegelungskugel 7 ist in einer radial verlaufenden Bohrung in der Wandung des Werkzeughalters 3 gehalten und kann in dieser Bohrung radial verschoben werden. In der Verriegelungsstellung (Fig. 5) greift die Verriegelungskugel 7 in die Ausnehmung 6 im Schaft 5 des Einsatzwerkzeugs 4 ein und sichert dadurch das Einsatzwerkzeug im Werkzeughalter 3.

Die Werkzeughalterung 2 umfasst des Weiteren eine Blockierhülse 8, die auf den vorderen Abschnitt des Werkzeughalters 3 aufgesetzt ist und die Verriegelungskugel 7 radial übergreift. Die Blockierhülse 8 ist mit einem Federelement 9 versehen, das die Blockierhülse 8 in Richtung der dem Einsatzwerkzeug 4 zugewandten Stirnseite der Werkzeugmaschine kraftbeaufschlagt; diese Position der Blockierhülse 8, die von der Blockierhülse unter der Wirkung des Federelementes 9 eingenommen wird, stellt die Blockierstellung der Blockierhülse dar. Eine axiale Verschiebung der Blockierhülse 8 entgegen der Federkraft überführt die Blockierhülse in die Freigabestellung.

Die Werkzeughalterung 2 umfasst des Weiteren ein als Steuerkugel 11 ausgeführtes Steuerelement, welches die axiale Stellbewegung der Blockierhülse 8 in Abhängigkeit der Einschubbewegung des Schaftes 5 in die Aufnahme im Werkzeughalter 3 steuert. Die Steuerkugel 11 ist axial beweglich in einem Langloch 12 aufgenommen, welches in die Wandung des Werkzeughalters 3 eingebracht ist. Außerdem besitzt die Steuerkugel 11 eine radiale Bewegungsmöglichkeit.

Die Blockierhülse 8 weist auf ihrer der Stirnseite der Werkzeugmaschine zugewandten Seite eine abgeschrägte Verstellfläche 10 auf, die mit der Längsachse 13 der Werkzeugmaschine einen Winkel einschließt. Die abgeschrägte Verstellfläche 10 erstreckt sich in Umfangsrichtung der Blockierhülse 8 und besitzt dadurch Konusform. Der freie Querschnitt erweitert sich in Richtung auf die axiale Stirnseite der Werkzeugmaschine gesehen. Bei einer axialen Verschiebung der Blockierhülse 8 entgegen der Kraft des auf sie wirkenden Federelementes 9 gelangt die abgeschrägte Verstellfläche 10 axial in den Bereich der Verriegelungskugel 7 und der Steuerkugel 11, wodurch den beiden Kugeln die Möglichkeit gegeben wird, radial auszuweichen und einen bezogen auf die Längsachse 13 größeren radialen Abstand einzunehmen.

In den der freien Stirnseite der Werkzeugmaschine abgewandten Teil ist in den Werkzeughalter 3 ein Schlagbolzen 14 eingesetzt, der in der Verriegelungsstellung (Fig. 5) auf Kontakt zur Stirnseite des Schaftes 5 liegt und diesen beaufschlagt. Im eingesetzten und verriegelten Zustand kann das Einsatzwerkzeug 4 drehend und/oder schlagend angetrieben werden.

Der Werkzeughalterung 2 ist des Weiteren eine Entriegelungshülse 15 zugeordnet, die von einem Federelement 16 in ihre Verriegelungsstellung kraftbeaufschlagt ist. Die Entriegelungshülse 15 ist axial verschieblich auf dem Werkzeughalter 3 angeordnet und umgreift auch die Blockierhülse 8, wobei ein Absatz der Entriegelungshülse 15 auf Kontakt zur Stirnseite der Blockierhülse 8 liegt. Wird die Entriegelungshülse 15 axial gegen die Kraft des auf sie wirkenden Federelementes 16 zurückgeschoben, hat dies über den Kontakt zur Blockierhülse 8 auch ein axiales Zurückschieben der Blockierhülse gegen die Kraft des Federelementes 9 zur Folge, welches die Blockierhülse 8 beaufschlagt. Auf diese Weise kann die Verriegelungskugel 7 aus der Verriegelungsstellung in die Entriegelungsstellung überführt und das Einsatzwerkzeug aus dem Werkzeughalter 3 herausgenommen werden.

Auf die Stirnseite des Werkzeughalters 3 ist eine Schutzkappe 17 aufgesetzt, die auch die Stirnseite der federbelasteten Entriegelungshülse 15 abdeckt und die die Federkräfte der Federelemente 9 und 16 aufnehmen kann und sich am Werkzeughalter abstützt.

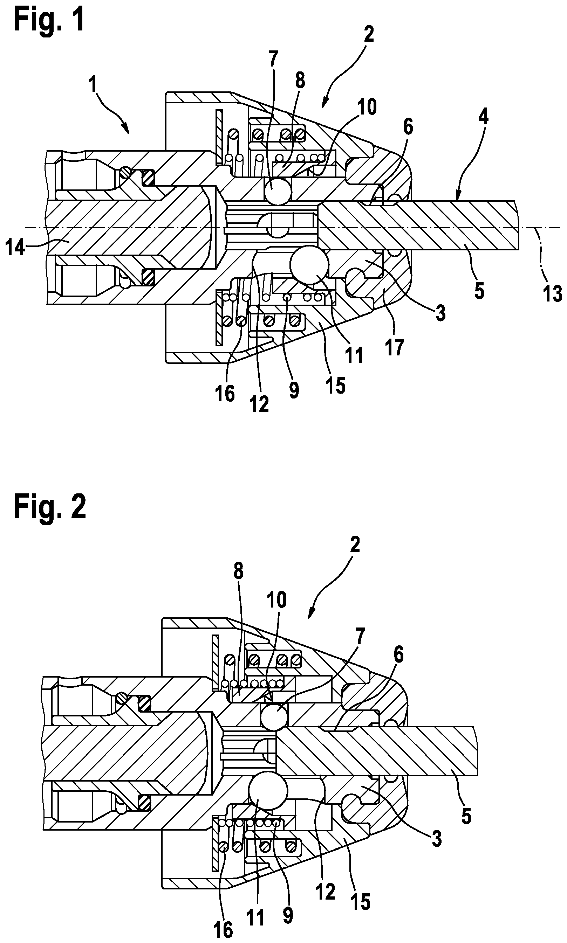

Die Verriegelung eines einzusteckenden Schaftes 5 eines Einsatzwerkzeuges 4 läuft wie folgt ab. Zunächst wird, wie in Fig. 1 dargestellt, der Schaft 5 des Einsatzwerkzeugs 4 axial in die Öffnung im Werkzeughalter 3 eingeschoben, und zwar so weit, bis die Stirnseite in Kontakt mit der Steuerkugel 11 gelangt, die axial verstellbar im Langloch 12 aufgenommen ist, welches in die Wandung des Werkzeughalters 3 eingebracht ist. Bei einem weiteren axialen Einschieben des Schaftes 5 in die Öffnung im Werkzeughalter 3 wird, wie in Fig. 2 dargestellt, die Steuerkugel 11 von dem Schaft 5 axial verschoben. Die Steuerkugel 11 liegt auf ihrer radial dem Schaft 5 gegenüberliegenden Seite an der abgeschrägten Verstellfläche 10 an, die in die Blockierhülse 8 eingebracht ist. Aufgrund dieses Kontaktes bewirkt ein axiales Verstellen der Steuerkugel 11 zugleich auch ein axiales Verstellen der Blockierhülse 8 gegen die Kraft des auf sie wirkenden Federelementes 9.

In Fig. 2 ist die Situation während einer ersten Bewegungsphase dargestellt, in der über die Steuerkugel 11 die Blockierhülse 8 soweit axial verstellt worden ist, dass die Verriegelungskugel 7, die in eine radiale Bohrung in der Wandung des Werkzeughalters 3 sitzt, sich in dem Bereich mit der abgeschrägten Verstellfläche 10 befindet. Dies eröffnet die Möglichkeit, dass die Verriegelungskugel 7 radial nach außen ausweichen kann, was in der in Fig. 1 dargestellten Situation nicht möglich ist, da dort die Innenwandung der Blockierhülse 8 unmittelbar auf Kontakt der Verriegelungskugel 7 liegt, die somit vollständig in die Bohrung in der Wandung des Werkzeughalters 3 einragt.

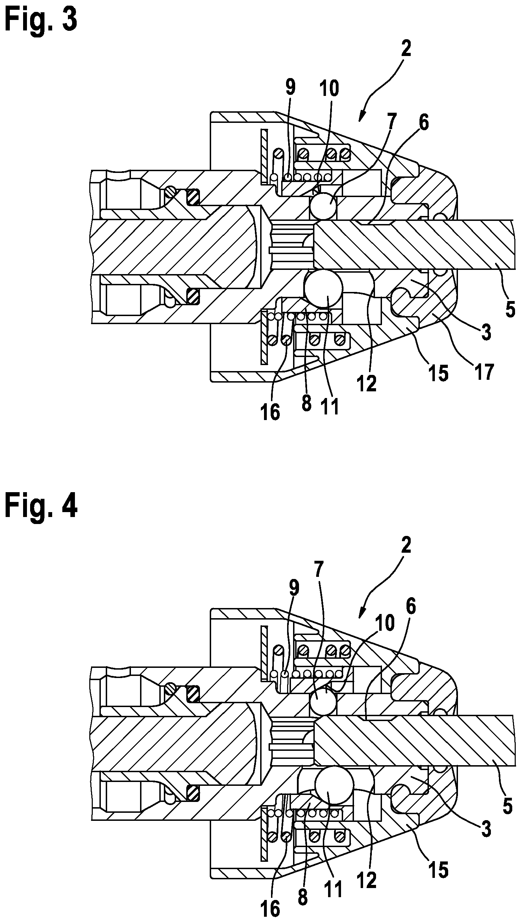

Fig. 3 kennzeichnet den Umkehrpunkt in der Bewegung der Blockierhülse 8. Die Steuerkugel 11 liegt axial in Anschlagsstellung an der dem Schlagbolzen zugewandten Stirnseite des Langlochs 12. Die Steuerkugel 11 muss bei weiterer axialer Einschubbewegung des Schaftes 5 radial nach unten entlang der abgeschrägten Verstellfläche 10 ausweichen (entlang der Hinterkante des Langlochs), und zwar so weit, bis die Steuerkugel 11 vollständig aus der Bewegungsbahn des Schaftes 5 entfernt ist. Dabei weicht die Blockierhülse 8 noch ein Stück axial gegen das Federelement 9 aus.

Zugleich wird die Verriegelungskugel 7 von dem Schaft 5 ebenfalls radial nach außen verdrängt, was aufgrund der Positionierung der abgeschrägten Verstellfläche 10 in Höhe der Verriegelungskugel 7 möglich ist.

In der Situation nach Fig. 3 beginnt die zweite Bewegungsphase der Blockierhülse 8, bei der die Blockierhülse von der Kraft des Federelementes 9 wieder in Richtung der Blockierstellung axial verschoben wird. Wie Fig. 3 in Verbindung mit Fig. 4 zu entnehmen, bewegt sich die Blockierhülse durch die Wirkung des Federelements 9 ein Stück weit in Richtung ihrer Blockierstellung, sobald die Steuerkugel 11 radial aus der Bahn des Schaftes 5 ausgewichen ist. Diese Stellbewegung in Richtung der Blockierposition wird von der Verriegelungskugel 7 gestoppt, an die die abgeschrägte Verstellfläche 10 an der Blockierhülse 8 in Anlage gelangt.

In Fig. 5 ist die Verriegelungsposition dargestellt, in der der Schaft 5 vollständig in die Aufnahme im Werkzeughalter 3 eingeschoben ist und die freie Stirnseite des Schaftes 5 auf Kontakt zum Schlagbolzen 14 liegt. In dieser axialen Position des Schaftes 5 befindet sich die Ausnehmung 6 in der Mantelfläche des Schaftes axial in Höhe der Verriegelungskugel 7. Die Verriegelungskugel 7 wird durch die Kraft, welche über das Federelement 9 und die Blockierhülse 8 sowie die abgeschrägte Verstellfläche 10 an der Blockierhülse radial auf die Verriegelungskugel ausgeübt wird, radial nach innen bis zum Kontakt mit der Wandung in der Ausnehmung 6 verstellt, wobei ein minimales radiales Spiel zwischen dem Einsatzwerkzeug und der Blockierhülse 8 erforderlich ist. Zugleich kann die Blockierhülse 8 durch die Wirkung der sie beaufschlagenden Feder 9 axial weiter bis zum Erreichen der Blockierstellung verschoben werden, in der sich die Verstellfläche 10 außerhalb der Verriegelungskugel 7 befindet, so dass die Verriegelungskugel 7 durch die Innenwand der Blockierhülse 8 radial fixiert ist und nicht mehr radial nach außen ausweichen kann. Dadurch befindet sich die Verriegelungskugel 7 in einer unverrückbaren Position in der Ausnehmung 6 des Schaftes 5, so dass das Einsatzwerkzeug im Werkzeughalter gesichert ist.

Die Steuerkugel 11 liegt weiterhin an der abgeschrägten Verstellfläche der Blockierhülse 8 an. Aufgrund der axialen Verschiebbarkeit der Steuerkugel 11 in der Ausnehmung 12, welche in die Wandung des Werkzeughalters 3 eingebracht ist, kann die Steuerkugel 11 die Stellbewegung der Blockierhülse 8 bis zum Erreichen der Blockierstellung mit ausführen.

In Fig. 6 ist die Entriegelungsposition dargestellt, in der der Schaft 5 des Einsatzwerkzeuges wieder aus der Aufnahme im Werkzeughalter 3 herausgenommen werden kann. Zum Entriegeln wird die Entriegelungshülse 15 gegen die Kraft des auf sie wirkenden Federelementes 16 axial zurückverschoben. Dadurch gelangt ein innen liegender Absatz 18 in der Entriegelungshülse 15 in Kontakt mit der der Schutzkappe 17 zugewandten Stirnseite der Blockierhülse 8 und bewegt diese gegen die Kraft des Federelementes 9 axial soweit zurück, bis die abgeschrägte Verstellfläche 10 der Blockierhülse 8 axial in den Bereich der Verriegelungskugel 7 gelangt, so dass die Verriegelungskugel 7 radial nach außen ausweichen kann. Sobald der Schaft 5 zurückverschoben wird, wird die Verriegelungskugel 7 in diese radial nach außen verstellte Position bewegt und der Schaft 5 kann entnommen werden.

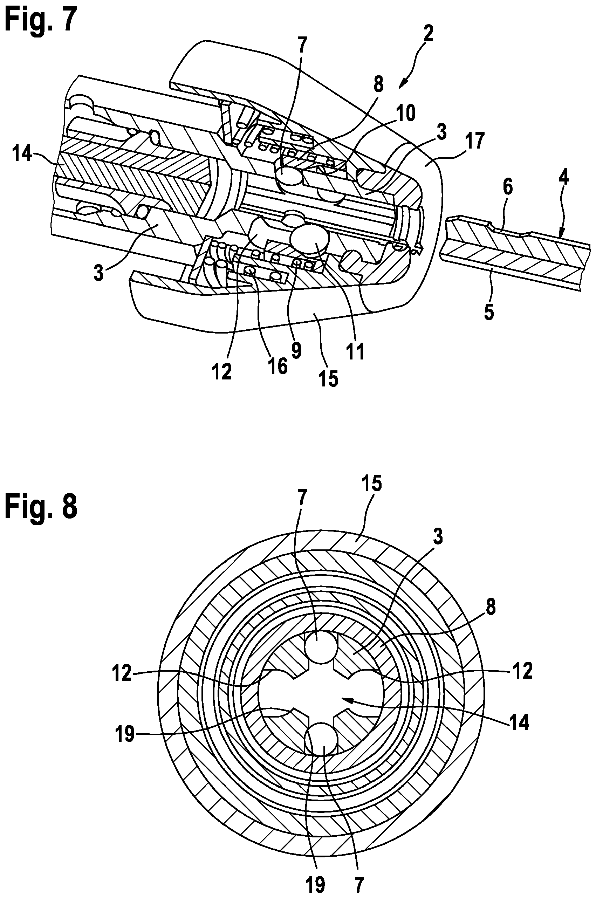

Wie den Figuren 7 und 8 zu entnehmen, können über den Umfang verteilt jeweils eine Mehrzahl von Verriegelungskugeln 7 und Steuerkugeln 11 vorgesehen sein. Im Ausführungsbeispiel sind jeweils zwei Verriegelungskugeln 7 und zwei Steuerkugeln 11 vorgesehen, wobei jeweils zwei Verriegelungskugeln um 180° zueinander und die Steuerkugeln ebenfalls um 180° zueinander versetzt sind, die Verriegelungskugeln und die Steuerkugeln zueinander jedoch um 90° versetzt angeordnet sind.

Der Innenmantel der Aufnahme im Werkzeughalter 3 kann verschiedene zueinander in einem Winkel angeordnete Innenflächen aufweisen, darüber hinaus können in den Innenmantel auch axial verlaufende Nuten eingebracht sein. Diese verschiedenen Flächen und Nuten ermöglichen die Aufnahme diverser Einsatzwerkzeuge mit unterschiedlich ausgebildeten Schäften.

In Fig. 8 ist dargestellt, dass sowohl die radial verlaufenden Bohrungen in der Wandung des Werkzeughalters 3, in die die Verriegelungskugeln 7 eingesetzt sind, als auch die Langlöcher 12, die ebenfalls in die Wandung des Werkzeughalters 3 eingebracht und zur Aufnahme der Steuerkugeln 11 bestimmt sind, radial nach innen zu jeweils eine Verengung 19 aufweisen, um eine radiales Durchrutschen der Verriegelungskugeln 7 bzw. Steuerkugeln 11 in den axialen Innenraum zu verhindern, der zur Aufnahme des Schaftes 5 ausgebildet ist.

## Patentansprüche

1. Werkzeughalterung für eine Werkzeugmaschine, insbesondere für eine Handwerkzeugmaschine wie z.B. ein Bohrhammer, mit einem Werkzeughalter (3), in den ein Einsatzwerkzeug (4) einsteckbar ist, welches über eine, ein Verriegelungselement (7) umfassende Verriegelungseinrichtung im Werkzeughalter (3) verriegelbar ist, wobei das Verriegelungselement (7) zwischen einer Entriegelungsstellung und einer das Einsatzwerkzeug (4) in der Werkzeughalterung verriegelnden Verriegelungsstellung verstellbar ist, wobei ein Blockierglied (8) im Werkzeughalter (3) gehalten und von dem Einsatzwerkzeug (4) verstellbar ist und die Bewegung des Verriegelungselements (7) in der Verriegelungsstellung von dem Blockierglied (8) gehemmt ist, **dadurch gekennzeichnet, dass** am Werkzeughalter (3) ein das Blockierglied (8) verstellendes Steuerelement (11) angeordnet ist, welches während der Überführung zwischen der Ent- und der Verriegelungsstellung in einer ersten Phase in einer das Blockierglied (8) beaufschlagenden Steuerposition und in einer zweiten Phase in Außerfunktionsposition steht, wobei das Steuerelement (11) in der Steuerposition eine Axialbewegung und zur Überführung in die Außerfunktionsposition eine Radialbewegung ausführt.

2. Werkzeughalterung nach Anspruch 1,
**dadurch gekennzeichnet, dass** das Verriegelungselement (7) bei der Überführung zwischen Ver- und Entriegelungsstellung eine Radialbewegung ausführt.

3. Werkzeughalterung nach Anspruch 1 oder 2,
**dadurch gekennzeichnet, dass** das Blockierglied (8) bei der Überführung zwischen Blockier- und Freigabestellung eine Axialbewegung ausführt.

4. Werkzeughalterung nach Anspruch 2 und 3,
**dadurch gekennzeichnet, dass** das Blockierglied (8) eine abgeschrägte Verstellfläche (10) aufweist, an der das Verriegelungselement (7) zur Überführung zwischen Ver- und Entriegelungsstellung in Anlage gelangt.

5. Werkzeughalterung nach einem der Ansprüche 1 bis 4,
**dadurch gekennzeichnet, dass** das Verriegelungselement als Verriegelungskugel (7) ausgebildet ist.

6. Werkzeughalterung nach einem der Ansprüche 1 bis 5,
**dadurch gekennzeichnet, dass** das Blockierglied als Blockierhülse (8) ausgebildet ist.

7. Werkzeughalterung nach einem der Ansprüche 1 bis 6,
**dadurch gekennzeichnet, dass** das Blockierglied (8) von einem Federelement (9) kraftbeaufschlagt ist, insbesondere in die Blockierstellung kraftbeaufschlagt ist, und von dem Einsatzwerkzeug (4) beim Einführen in den Werkzeughalter (3) gegen die Kraft des Federelements (9) zu verstellen ist.

8. Werkzeughalterung nach Anspruch 1,
**dadurch gekennzeichnet, dass** das Steuerelement (11) über die Einführbewegung des Einsatzwerkzeugs (4) in den Werkzeughalter (3) steuerbar ist.

9. Werkzeughalterung nach Anspruch 4,
**dadurch gekennzeichnet, dass** zur Durchführung der Radialbewegung das Steuerelement (11) in Anlage der abgeschrägten Verstellfläche (10) am Blockierglied (8) gelangt.

10. Werkzeughalterung nach Anspruch 9,
**dadurch gekennzeichnet, dass** das Steuerelement (11) in Anlageposition an der Stirnseite eines axial verlaufenden Langlochs (12) gelangt, das in die Wandung des Werkzeughalters (3) eingebracht ist.

11. Werkzeughalterung nach einem der Ansprüche 9 oder 10,
**dadurch gekennzeichnet, dass** in der zweiten Phase das Blockierglied (8) in eine das Verriegelungselement (7) arretierende Position zu verstellen ist.

12. Werkzeughalterung nach einem der Ansprüche 7 bis 11,
**dadurch gekennzeichnet, dass** das Steuerelement als Steuerkugel (11) ausgebildet ist.

13. Werkzeughalterung nach einem der Ansprüche 1 bis 12,
**dadurch gekennzeichnet, dass** zur Überführung von der Verriegelungsstellung in die Entriegelungsstellung eine Entriegelungshülse (15) gegen die Kraft eines auf sie wirkenden Federelements (16) axial zu verstellen ist, wobei die Entriegelungshülse (15) das Blockierglied (8) verstellt.

14. Werkzeugmaschine, insbesondere Handwerkzeugmaschine wie z.B. ein Bohrhammer, mit einer Werkzeughalterung nach einem der Ansprüche 1 bis 13.

## Claims

1. Tool mounting for a power tool, in particular for a portable power tool, for example a hammer drill, having a tool holder (3) into which an application tool (4) is able to be plugged, said application tool (4) being lockable in the tool holder (3) via a locking device comprising a locking element (7), wherein the locking element (7) is adjustable between an unlocking position and a locking position locking the application tool (4) in the tool mounting, wherein a blocking member (8) is held in the tool holder (3) and is adjustable by the application tool (4), and the locking element (7) is prevented from moving in the locking position by the blocking member (8), **characterized in that** a control element (11) that adjusts the blocking member (8) is arranged on the tool holder (3), said control element (11) being in a control position acting on the blocking member (8) in a first phase and being in a non-functioning position in a second phase while the locking element (7) is being transferred between the unlocking position and the locking position, wherein the control element (11) executes an axial movement in the control position and a radial movement in order to be transferred into the non-functioning position.

2. Tool mounting according to Claim 1, **characterized in that** the locking element (7) executes a radial movement while it is being transferred between the locking position and unlocking position.

3. Tool mounting according to Claim 1 or 2, **characterized in that** the blocking member (8) executes an axial movement while it is being transferred between the blocking position and releasing position.

4. Tool mounting according to Claims 2 and 3, **characterized in that** the blocking member (8) has a chamfered adjustment face (10) against which the locking element (7) comes into abutment while it is being transferred between the locking position and unlocking position.

5. Tool mounting according to one of Claims 1 to 4, **characterized in that** the locking element is in the form of a locking ball (7).

6. Tool mounting according to one of Claims 1 to 5, **characterized in that** the blocking member is in the form of a blocking sleeve (8).

7. Tool mounting according to one of Claims 1 to 6, **characterized in that** the blocking member (8) is subjected to a force by a spring element (9), in particular urged by a force into the blocking position, and is intended to be adjusted counter to the force of the spring element (9) by the application tool (4) upon introduction into the tool holder (3).

8. Tool mounting according to Claim 1, **characterized in that** the control element (11) is controllable via the movement introducing the application tool (4) into the tool holder (3).

9. Tool mounting according to Claim 4, **characterized in that**, in order to execute the radial movement, the control element (11) passes into abutment against the blocking member (8) by way of the chamfered adjustment face (10).

10. Tool mounting according to Claim 9, **characterized in that** the control element (11) passes into an abutment position against the end side of an axially extending slot (12) which has been introduced into the wall of the tool holder (3).

11. Tool mounting according to either of Claims 9 and 10, **characterized in that**, in the second phase, the blocking member (8) is intended to be adjusted into a position arresting the locking element (7).

12. Tool mounting according to one of Claims 7 to 11, **characterized in that** the control element is in the form of a control ball (11).

13. Tool mounting according to one of Claims 1 to 12, **characterized in that**, for transfer from the locking position into the unlocking position, an unlocking sleeve (15) is intended to be adjusted axially counter to the force of a spring element (16) acting thereon, wherein the unlocking sleeve (15) adjusts the blocking member (8).

14. Power tool, in particular portable power tool, for example a hammer drill, having a tool mounting according to one of Claims 1 to 13.

## Revendications

1. Dispositif porte-outil pour une machine-outil, en particulier pour une machine-outil portative comme par exemple un marteau perforateur, comprenant un porte-outil (3) dans lequel peut être inséré un outil d'insertion (4) qui peut être verrouillé dans le porte-outil (3) par le biais d'un dispositif de verrouillage comprenant un élément de verrouillage (7), l'élément de verrouillage (7) pouvant être déplacé entre une position de déverrouillage et une position de verrouillage verrouillant l'outil d'insertion (4) dans le dispositif porte-outil, un organe de blocage (8) étant retenu dans le porte-outil (3) et pouvant être déplacé par l'outil d'insertion (4) et le déplacement de l'élément de verrouillage (7) dans la position de verrouillage étant bloqué par l'organe de blocage (8), **caractérisé en ce qu'**un élément de commande (11) réglant l'organe de blocage (8) est disposé sur le porte-outil (3), lequel, pendant le transfert entre la position de déverrouillage et la position de verrouillage, est dans une première phase, dans une position de commande sollicitant l'organe de blocage (8), et dans une deuxième phase, dans une position non fonctionnelle, l'élément de commande (11), dans la position de commande, effectuant un mouvement axial et, pour le transfert dans la position non fonctionnelle, effectuant un mouvement radial.

2. Dispositif porte-outil selon la revendication 1, **caractérisé en ce que** l'élément de verrouillage (7), lors du transfert entre la position de verrouillage et la position de déverrouillage, effectue un déplacement radial.

3. Dispositif porte-outil selon la revendication 1 ou 2, **caractérisé en ce que** l'organe de blocage (8), lors du transfert entre la position de blocage et la position de libération, effectue un mouvement axial.

4. Dispositif porte-outil selon les revendications 2 et 3, **caractérisé en ce que** l'organe de blocage (8) présente une surface de réglage biseautée (10) contre laquelle l'élément de verrouillage (7) vient en appui pour le transfert entre la position de verrouillage et la position de déverrouillage.

5. Dispositif porte-outil selon l'une quelconque des revendications 1 à 4, **caractérisé en ce que** l'élément de verrouillage est réalisé sous forme de bille de verrouillage (7).

6. Dispositif porte-outil selon l'une quelconque des revendications 1 à 5, **caractérisé en ce que** l'organe de blocage est réalisé sous forme de manchon de blocage (8).

7. Dispositif porte-outil selon l'une quelconque des revendications 1 à 6, **caractérisé en ce que** l'organe de blocage (8) est sollicité par force par un élément de ressort (9), en particulier est sollicité par force dans la position de blocage, et doit être déplacé à l'encontre de la force de l'élément de ressort (9) par l'outil d'insertion (4) lors de l'insertion dans le porte-outil (3).

8. Dispositif porte-outil selon la revendication 1, **caractérisé en ce que** l'élément de commande (11) peut être commandé par le mouvement d'insertion de l'outil d'insertion (4) dans le porte-outil (3).

9. Dispositif porte-outil selon la revendication 4, **caractérisé en ce que** pour effectuer le mouvement radial, l'élément de commande (11) vient en appui contre la surface de réglage biseauté (10) au niveau de l'organe de blocage (8).

10. Dispositif porte-outil selon la revendication 9, **caractérisé en ce que** l'élément de commande (11) parvient dans une position d'appui contre le côté frontal d'un trou oblong (12) s'étendant axialement, lequel est réalisé dans la paroi du porte-outil (3).

11. Dispositif porte-outil selon l'une quelconque des revendications 9 ou 10, **caractérisé en ce que** dans la deuxième phase, l'organe de blocage (8) doit être déplacé dans une position bloquant l'élément de verrouillage (7).

12. Dispositif porte-outil selon l'une quelconque des revendications 7 à 11, **caractérisé en ce que** l'élément de commande est réalisé sous forme de bille de commande (11).

13. Dispositif porte-outil selon l'une quelconque des revendications 1 à 12, **caractérisé en ce que** pour le transfert de la position de verrouillage dans la position de déverrouillage, un manchon de déverrouillage (15) doit être déplacé axialement à l'encontre de la force d'un élément de ressort (16) agissant sur celui-ci, le manchon de déverrouillage (15) déplaçant l'organe de blocage (8).

14. Machine-outil, en particulier machine-outil à main telle que par exemple un marteau perforateur, comprenant un dispositif porte-outil selon l'une quelconque des revendications 1 à 13.
